# EUROPEAN PATENT APPLICATION

(11) **EP 0 599 351 A1**
(43) Date of publication of application: **01.06.1994**
(21) Application number: 93119197.7
(22) Date of filing: 29.11.1993
(51) Int. Cl.: C10L 3/10, B01J 23/80

(54) **Method of desulfurization of town gas**

(30) Priority: 27.11.1992 JP 341235/92
(71) Applicant: OSAKA GAS CO., LTD., Osaka-shi, Osaka-fu 541 (JP)
(72) Inventor: Masuda, Masataka, Osaka-shi, Osaka 554 (JP); Okada, Osamu, Osakasayama-shi, Osaka 589 (JP); Tabata, Takeshi, Toyonaka-shi, Osaka 561 (JP); Takami, Susumu, Osaka-shi, Osaka 554 (JP)
(74) Representative: Hansen, Bernd, Dr. Dipl.-Chem.

(57) **Abstract**

A method of desulfurization of town gas is disclosed.

The method of desulfurization of town gas of the invention is a method for desulfurizing town gas not containing hydrogen gas chracterized in that the desulfurization is carried out by adding hydrogen to the town gas, and by using copper-zinc desulfurizing agnet prepared by co-precipitation method. According to the invention, town gas desulfurized at high degree can be obtained stably for a long period of time.

## Description

### TECHNICAL FIELD

The present invention relates to a method of desulfurization of town gas. More particularly, the invention relates to a method of desulfurization capable of lowering the sulfur content in town gas not containing hydrogen gas stably for a long period and at high degree.

### BACKGROUND ART

Town gas mostly contains sulfur compounds as an odorant at about 5 ppm or more as sulfur content. As the odor, for its purpose, dimethyl sulfide and other sulfur compounds stable physicochemically and not easily adsorbed are used. These sulfur compounds may adversely affect the catalysts when reforming and burning town gas by using catalysts, and therefore it is used after the sulfur contents are removed in the desulfurization step using desulfurizing agent. As the method of removing such stable sulfur compounds, hydrodesulfurization method employed in desulfurization of petroleum fractions in chemical process, and adsorption desulfurization by activated carbon may be considered. In the former method, however, the maximum desulfurization level that can be reached is about 0.1 ppm, and poisoning of the catalyst cannot be prevented completely. In the latter method, the activated carbon adsorbs simultaneously the hydrocarbons with 3 to 6 carbon atoms contained in the order of thousands of ppm in the town gas, almost all of the sites to be adsorbed in principle by the sulfur compounds cannot be utilized, and if attempted to keep a sufficient sulfur adsorption amount, the required activated carbon amount may be excessive.

Accordingly, as disclosed in the Japanese Patent Unexamined Publication No. 302496/1990, a method for desulfurizing town gas by using copper desulfurizing agent is known. In this method, the sulfur content in the town gas can be desulfurized to 0.1 ppb or less, and it has a sufficient life as compared with activated carbon, but it is required to have a much longer in order to incorporate into an actual process and use stably for a long time.

It is hence a primary object of the invention to present a method of desulfurization capable of desulfurizing town gas at high degree and stably for a long period of time.

### SUMMARY OF THE INVENTION

In order to solve the problems of the prior arts, the present inventors accumulated studies, and discovered that trace hydrogen is playing a vital role in desulfurization of sulfur compounds that are hard to remove by adsorption desulfurization, such as dimethyl sulfide, when desulfurizing town gas by using copper-zinc desulfurizing agent, and that the sulfur compounds in town gas can be decreased notably and stably for a long period by desulfurizing by adding a small amount of hydrogen to town gas, and hence completed the invention.

More specifically, the method of desulfurization of town gas of the invention is a method for desulfurizing town gas not containing hydrogen gas by using copper-zinc desulfurizing agent prepared by co-precipitation method, and is characterized by adding hydrogen to the town gas. In particular, hydrogen is added to the town gas by about 0.01% (vol.%, same hereinafter), but if the hydrogen is added excessively, the desulfurization effect is unchanged, but it is rather disadvantageous economically. Therefore, it is a preferred method of desulfurizing town gas while adding hydrogen by about 0.01 to 10%, preferably about 0.1 to 7%, or more preferably about 1 to 5%.

According to the method of the invention, the sulfur content in the town gas after desulfurization can be securely set to 5 ppb (as of sulfur content, same hereinafter) or less, or 1 ppb or less in ordinary condition, or 0.1 ppb or less in preferred condition.

### DETAILED DESCRIPTION OF THE INVENTION

In the invention, town gas not containing hydrogen includes gas mainly composed of hydrocarbons with one to five carbon atoms, for example, natural gas, liquefied natural gas, liquefied petroleum gas, petroleum refined off-gas, and their mixture gases.

According to the method of desulfurization of the invention, using copper-zinc desulfurizing agent prepared by co-precipitation method as desulfurizing agent, the town gas is brought into contact with the desulfurizing agent while adding hydrogen.

As the copper-zinc desulfurizing agent, it is not particularly limited as far as the desulfurizing agent contains at least copper (metal) and zinc oxide and is prepared by co-precipitation method, and preferably Cu-Zn desulfurizing agent and Cu-Zn-Al desulfurizing agent prepared by the following methods are preferably employed.

### (1) Cu-Zn desulfurizing agent

An aqueous solution containing copper compound (such as copper nitrate and copper acetate) and zinc compound (such as zinc nitrate and zinc acetate) and an aqueous solution of an alkaline substance (such as sodium carbonate and potassium carbonate) are mixed to form precipitate (co-precipitation method). The formed precipitate is washed sufficiently with water, filtered, and dried. It is then calcined at about 270 to 400°C, and is once transformed into slurry by adding water, and then filtered and dried, and a mixture of copper oxide and zinc oxide is obtained. The ratio of copper oxide and zinc oxide is generally, by atomic ratio, copper:zinc = 1: about 0.3 to 10, or preferably 1: about 0.5 to 3, or more preferably 1: about 1 to 2.3. If the zinc content is too small, sintering of copper cannot be prevented effectively, or if the zinc content is too much, to the contrary, the sufficient desulfurization performance as copper based desulfurizing agent cannot be exhibited. Consequently, thus obtained mixed oxide is subjected to hydrogen reduction. Hydrogen reduction is conducted by reducing the mixture at about 150 to 350°C in the presence of hydrogen gas diluted with gas not responsible for reaction (such as nitrogen gas, argon gas, methane gas, etc.) so that the hydrogen content may be 6% or less, or preferably about 0.5 to 4 vol.%. Thus obtained Cu-Zn desulfurizing agent may contain certain metal compounds as other carrier components, for example, chromium oxide. In this process, moreover, when calcining the precipitate or reducing the mixture in hydrogen, it is preferred to form into tablet, extrusion forming or other shape after adding additives as required.

### (2) Cu-Zn-Al desulfurizing agent

An aqueous solution containing copper compound (such as copper nitrate, copper acetate), zinc compound (such as zinc nitrate, zinc acetate) and aluminum compound (such as aluminum hydroxide, aluminum nitrate, sodium aluminate) and an aqueous solution of alkaline substance (such as sodium carbonate, potassium carbonate) are mixed to form precipitate (co-precipitation method).

At this time, by adding aluminum compound to the solution of alkaline substance, this solution and the aqueous solution containing copper compound and zinc compound may be mixed to form precipitate. Successively, the formed precipitate is sufficiently washed with water, filtered, and dried. Next, it is calcined at about 270 to 400°C, and is once transformed into slurry by adding water, and filtered, and dried, thereby obtaining a mixture of copper oxide-zinc oxide-aluminum oxide. The ratio of copper oxide, zinc oxide and aluminum oxide is generally, by atomic ratio, copper:zinc:aluminum = 1: about 0.3 to 10: about 0.05 to 2, or preferably 1: about 0.6 to 3: about 0.3 to 1. If the zinc content is too small, sintering of copper cannot be prevented effectively, or if the zinc content is excessive, on the other hand, the sufficient desulfurization performance as copper based desulfurizing agent cannot be exhibited. If the aluminum content is too small, the Cu-ZnO structure cannot be stabilized, or if the aluminum content is excessive, the desulfurization performance is lowered. Thus obtained mixed oxide is subjected to hydrogen reduction. Hydrogen reduction is conducted by reducing the mixture at about 150 to 350°C in the presence of hydrogen gas diluted with gas not responsible for reaction (such as nitrogen gas, argon gas, methane gas, etc.) so that the hydrogen content may be 6% or less, or preferably about 0.5 to 4 vol.%. Thus obtained Cu-Zn-Al desulfurizing agent may contain certain metal compounds as other carrier components such as chromium oxide. In this process, moreover, when calcining the precipitate or reducing the mixture in hydrogen, it is preferred to form into tablet, extrusion forming or other shape after adding additives as required.

Concerning the hydrogen reduction of mixed oxide in (1) and (2), since the copper has a low melting point and the particle size is increased by heat, and the surface area is likely to decrease, and the porous structure is delicately changed by excessive heat, and, as a result, the characteristic as the desulfurizing agent is greatly changed. In addition, hydrogen reduction of copper oxide is an exothermic reaction. Therefore, in the hydrogen reduction of mixed oxide, it is preferred to progress the hydrogen reduction of the mixed oxide in moderate conditions, and it is a preferred method to reduce while keeping the temperature around 150 to 350°C, in the presence of hydrogen gas diluted with gas not responsible for reaction. As the gas not responsible for reaction, inert gas such as nitrogen gas is preferably used.

The copper-zinc desulfurizing agent obtained in this method has a fine structure composed of aggregates of particles, and very tiny copper particles are uniformly dispersed on the surface of zinc oxide particles, and copper is in highly active state by chemical interaction with zinc oxide. In Cu-Zn-Al desulfurizing agent, aluminum oxide is distributed entirely, and sintering of copper particles and zinc oxide particles by heat is prevented, so that the highly active state is held.

Therefore, when using such desulfurizing agents, the sulfur content in the town gas can be securely lowered to 5 ppb or less, or 1 ppb or less in ordinary condition, or easily 0.1 ppb or less in proper conditions. In particular, with the Cu-Zn-Al desulfurizing agent, by the action of aluminum oxide, it is excellent in heat resistance, and lowering of strength and lowering of sulfur adsorption capacity at high temperature can be notably decreased, and the limitations of the usable temperature range may be alleviated.

In the desulfurization method of the invention, thus prepared copper-zinc desulfurizing agent is used in a temperature range of 150 to 300°C. Or ,the Cu-Zn-Al desulfurizing agent may be used in a temperature range of about 150 to 400°C. Preferably, before desulfurizing town gas, the town gas should be preheated by using heater or through heat exchange with desulfurized gas, and desulfurization may be conducted at about 150 to 400°C. The desulfurization temperature is desired to be higher from the viewpoint of accelerating the decomposition reaction rate of the sulfur compound, but if the temperature is too high, on the other hand, the copper component in the desulfurizing agent may induce sintering, and the surface area of the desulfurizing agent decreases. Therefore, actually, it is desired to use at 200 to 350°C, or preferably 250 to 300°C.

The method of desulfurization of the invention is generally effected by passing town gas and hydrogen in a desulfurization tube filled with copper-zinc desulfurizing agent. The amount of hydrogen to be added is adjusted depending on the type and quantity of the sulfurs contained in the town gas, but it is desired to add hydrogen by at least 0.01% or more, since that the actual content of sulfur is in the order of ppm, generally about 0.01 to 10%, preferably about 0.1 to 7%, or more preferably about 1 to 5%. Besides, in the case of desulfurization as pretreatment in a steam reforming process, hydrogen produced by steam reforming reaction may be partly recycled and used. The amount of the desulfurizing agent to fill in is properly set depending on the sulfur content in the town gas and desulfurization conditions of use, and generally it may be set so that GHSV be about 200 to 4,000 (liters/hour), preferably about 300 to 2,000 (liters/hour).

To extend the life of copper-zinc desulfurizing agent, it is preferred to fill with zinc oxide adsorption desulfurizing agent prior to copper-zinc desulfurizing agent, and preliminarily remove the sulfur compound that can be adsorbed by zinc oxide. According to this method, since hydrogen sulfide contained in town gas can be removed by zinc oxide, the load of the copper-zinc desulfurizing agent can be alleviated, and, as a result, the life is extended. If sulfur compound of mercaptan derivative is contained in town gas, it is adsorbed by zinc oxide, and the load of the copper-zinc desulfurizing agent can be alleviated, so that the life may be extended.

According to the invention, by the effect of coexisting hydrogen together with the use of copper-zinc desulfurizing agent extremely excellent in desulfurization performance, the town gas desulfurized to a high degree can be easily and stably obtained for a long time, with a small amount of desulfurizing agent. Therefore, when reforming town gas by using catalyst susceptible to sulfur poisoning, sulfur poisoning of catalyst can be prevented completely practically, and adverse effects by sulfur can be eliminated to an extremely advanced level.

### EXAMPLES

The invention is more specifically described below while referring to Examples and Comparative Examples, but the invention is not limited to these examples alone.

### Example 1

A mixed aqueous solution containing copper nitrate and zinc nitrate at a molar ratio of 1:1, and an aqueous solution of sodium carbonate were simultaneously dropped into purified water kept at around 80°C at a constant rate while stirring. The formed precipitate was matured, washed, filtered, dried, and formed into tablets of 1/8 inch in diameter by 1/8 inch in length, and further calcined at around 280°C. In a desulfurizing tube (desulfurizing layer length 30 cm) filled with about 150 cc of the calcined material, nitrogen gas containing hydrogen by 1 vol.% was passed, and reduced at temperature of 200°C, and in this desulfurizing tube, 150 liters/h of town gas composed as shown in Table 1 (hereinafter referred to as 13A gas) and hydrogen (1.5 liters/h) were passed (GHSV = 1000 h⁻¹), and desulfurization was conducted in the conditions of temperature of 200°C and pressure of 0.02 kg/cm²-G.

**Table 1**

| | | |
|---|---|---|
| Methane | | 86.9 vol.% |
| Ethane | | 8.1 vol.% |
| Propane | | 3.7 vol.% |
| Butane | | 1.3 vol. % |
| Odorant | Dimethyl sulfide | 3 mg-S/Nm³ |
| | t-Butyl mercaptan | 2 mg-S/Nm³ |

The sulfur content in the desulfurization gas was measured at fixed time intervals by the cold trap method, and the findings were below 0.1 ppb in operation for 2,000 hours.

### Comparative Example 1

Using the same desulfurizing agent as in Example 1, 13A gas (150 liters/h) was passed without adding hydrogen, and desulfurized in the conditions of temperature of 200°C and pressure of 0.02 kg/cm²-G. As a result, In about 1,200 hours, the sulfur content in the desulfurization gas went up to 0.1 ppm.

### Example 2

Dissolving aluminum hydroxide at about 120°C in aqueous solution of sodium hydroxide, the mixture was stirred until aluminate was formed. This sodium aluminate solution was added to sodium carbonate solution, and the solution was kept at about 60°C. To this solution, a mixed aqueous solution containing copper nitrate and zinc nitrate at a molar ratio of 1:1 was gradually dropped while stirring to form precipitate. The precipitate was sufficiently washed with water, filtered, and dried. It was then calcined at about 280°C, and was once transformed into slurry by adding water, and filtered, dried, and formed into a size of 1/8 inch in diameter by 1/8 inch in length, and a mixture of copper oxide-zinc oxide-aluminum oxide at molar ratio of 1:1:0.3 was obtained. Successively, in a desulfurizing tube (desulfurizing layer length 30 cm) filled with about 150 cc of the mixture, nitrogen gas containing 1 vol.% of hydrogen was passed, and reduced at temperature of 200°C, and 13A gas (150 liters/h) and hydrogen (1.5 liters/h) were passed through the desulfurizing tube (GHSV = 1000 h⁻¹), and desulfurization was conducted in the condition of temperature of 200°C and pressure of 0.02 kg/cm²-G.

The sulfur content in the desulfurized gas was measured at time intervals by cold trap method, the findings were below 0.1 ppb throughout operation for 2,400 hours.

### Example 3

A mixed aqueous solution containing copper nitrate, zinc nitrate and aluminum hydroxide at a molar ratio of 1:1:0.3 was dropped into an aqueous solution of sodium carbonate kept at about 60°C while stirring to form precipitate. The precipitate was sufficiently washed with water, filtered, and dried. It was then calcined at about 280°C, and was once transformed to slurry by adding water, filtered, and dried, thereby forming into a size of 1/8 inch in diameter by 1/8 inch in length. In a desulfurizing tube (desulfurizing layer length 30 cm) filled with about 150 cc of the calcined material, nitrogen gas containing hydrogen by 1 vol.% was passed to reduce at temperature of 200°C, and 13A gas (150 liters/h) and hydrogen (1.5 liters/h) were passed through the desulfurizing tube (GHSV = 1000 h⁻¹), and desulfurization was conducted in the conditions of temperature of 200°C and pressure of 0.02 kg/cm²-G.

The sulfur content in desulfurized gas was measured at time intervals by cold trap method, and the findings were below 0.1 ppb throughout operation for 2,400 hours.

### Example 4

Desulfurization of 13A gas was conducted in the same conditions as in Example 3, except that the hydrogen was added by about 0.1% (0.15 liters/h).

As a result, the sulfur contents in the desulfurized gas were kept under 0.1 ppb during operation for 2,400 hours.

### Example 5

Adding aluminum hydroxide to aqueous solution of sodium carbonate, the solution was kept at 60°C, and a mixed aqueous solution containing copper nitrate and zinc nitrate at a molar ratio of 1:1 was gradually dropped thereto while stirring to form precipitate. The subsequent treatment was same as in Example 3, and a mixture of copper oxide-zinc oxide-aluminum oxide at a molar ratio of 1:1:0.3 was obtained. Successively, in a desulfurizing tube (desulfurizing layer length 30 cm) filled with about 150 cc of the calcined material, nitrogen gas containing hydrogen by 1 vol.% was passed to reduce at temperature of 200°C, and 13A gas (150 liters/h) and hydrogen (1.5 liters/h) were passed through the same desulfurizing tube (GHSV = 1000 h⁻¹), and desulfurization was conducted in the conditions of temperature of 200°C and pressure of 0.02 kg/cm²-G.

The sulfur contents in desulfurized gas were measured at time intervals by cold trap method, and the findings were under 0.1 ppb during operation for 2,400 hours.

### Example 6

Using the same desulfurizing agent as in Example 5, 13A gas was desulfurized in the same conditions as in Example 3, except that the desulfurization temperature was 250°C.

As a result, the sulfur contents in desulfurized gas were suppressed under 0.1 ppb during operation for 4,000 hours.

### Example 7

By the same manner as in Example 2, LPG (sulfur content 5 ppm) was desulfurized at a flow rate of 150 liters/h, by adding about 1% of hydrogen (1.5 liters/h).

As a result, the sulfur contents in desulfurized gas were suppressed under 0.1 ppb during operation for 2,000 hours.

### Example 8

In a desulfurization apparatus of a conventional fuel cell power generation system (phosphoric acid electrolyte type) using town gas as raw fuel, Cu-Zn-Al desulfurizing agent was charged, and desulfurization of raw fuel was tested. As the desulfurization apparatus, a desulfurization tube (desulfurization layer length about 76 cm) filled with 38 liters of Cu-Zn-Al desulfurizing agent obtained by the same method as in Example 3 was used.

As the raw fuel, town gas 13A composed as shown in Table 1 was used, and this gas (12 Nm³/h, GHSV = 320 h⁻¹) was preheated to 200°C, and was introduced into the desulfurization tube together with 0.1 Nm³ of hydrogen to be desulfurized. The desulfurized gas was subjected to steam reforming reaction in the condition of S/C (number of moles of steam per one mole carbon in the hydrocarbon) = 2.0, reaction temperature of 450°C (inlet) and 665°C (outlet), and reaction pressure 0.1 kg/cm³. The fuel gas treated by steam reforming was denatured in a carbon monoxide shift converter of heat exchange reactor type filled with commercial low temperature carbon monoxide shift catalyst in the conditions of converter outlet temperature of 190°C and reaction temperature of 0.2 kg/cm², and was led into the fuel electrode of fuel cell main body to react with oxygen in the air introduced in the oxide electrode, and electric energy was taken out.

The sulfur content in gas at the desulfurization apparatus outlet was measured, and the sulfur content in 6200 hours was 0.1 ppb or less, and the steam reforming catalyst maintained a similar activity as right after start of the reaction even after lapse of 6,200 hours, and the fuel cells worked normally.

### Comparative Example 2

A desulfurization tube same as in Example 1 was filled with 150 cc of copper supported on activated carbon (surface area about 700 m²/g) instead of copper-zinc desulfurizing agent, and 13A gas (150 liters/h) was passed, and desulfurization was conducted in the conditions of temperature of 25°C and pressure of 0.02 kg/cm²-G.

As a result, the sulfur contents in desulfurized gas went up to 0.1 ppm in about 100 hours. By adding hydrogen, the desulfurization effect was unchanged.

### Example 9

Desulfurization was conducted in the same manner as in Example 3 except that 13A gas was passed by 139.5 liters/h, and the hydrogen was added by 10.5 liters/h.

As a result, the sulfur contents in desulfurized gas were suppressed under 0.1 ppb during operation for 2,400 hours.

### Example 10

Desulfurization was conducted in the same manner as in Example 3 except that 13A gas was passed by 135 liters/h, and the hydrogen was added by 15 liters/h.

As a result, the sulfur contents in desulfurized gas were suppressed under 0.1 ppb during operation for 2,400 hours.

### Comparative Example 3

A desulfurization tube same as in Example 1 was filled with copper-zinc desulfurizing agent prepared by kneading method (pellets of 1/8 inch in height by 1/8 inch in diameter, copper content = 41 wt.%, copper:zinc (atomic ratio) = 1:0.76), and nitrogen gas containing hydrogen by 1 vol.% was passed to reduce at temperature of 200°C, and 13A gas (150 liters/h) and hydrogen (1.5 liters/h) were added, and desulfurization was conducted in the conditions of temperature of 200°C and pressure of 0.02 kg/cm²-G.

As a result, in about 208 hours after start of operation, the sulfur content in desulfurized gas went up to 0.05 ppm. Thus, the desulfurization effect of desulfurizing agent prepared by kneading method was inferior to the desulfurization agent prepared by co-precipitation method.

### Comparative Example 4

A commercial product of zinc nitrate (G-72D of Nissan Gardler, Japan) was ground, and screened into a size of about 3 mm, and it was impregnated with copper nitrate aqueous solution, and heated and concentrated. By drying and further heating at about 280°C, zinc oxide-copper oxide mixture (molar ratio 95:5) was obtained.

Successively, a desulfurization tube same as in Example 1 was filled with about 150 cc of the calcined material, and nitrogen gas containing hydrogen by 1 vol% was passed to reduce at temperature of 200°C, and 13A gas (150 liters/h) and hydrogen (1.5 liters/h) were added, and desulfurization was conducted in the conditions of temperature of 200°C and pressure of 0.02 kg/cm²-G.

As a result, sulfurs were detected in desulfurized gas right after start of operation, and the concentration went up to 0.1 ppm in about an hour.

### Comparative Example 5

A mixed aqueous solution containing copper nitrate, zinc nitrate and aluminum nitrate at a molar ratio of 1:1:0.3, and an aqueous solution of sodium carbonate were simultaneously dropped into purified water kept at about 80 °C at a constant rate while stirring. At this time, precipitate was formed while the pH of the solution was maintained at 7 to 7.5. After maturing, washing, filtering and drying the formed precipitate, it was formed into tablets in a size of 1/8 inch in diameter by 1/8 inch in length, which were further calcined at about 280°C.

A desulfurization tube (desulfurization layer length 30 cm) was filled with 150 cc of the calcined material, and without prior hydrogen reduction, 13A gas (150 liters/h) and hydrogen (0.15 liter/h) were passed through the desulfurization tube (GHSV = 1000 h⁻¹), and desulfurization was conducted in the conditions of temperature of 200°C and pressure of 0.02 kg/cm²-G.

As a result, sulfurs were detected in desulfurized gas from right after start of operation, and the concentration went up to 0.05 ppm in about 3 hours.

### Comparative Example 6

A desulfurization tube (desulfurization layer length 30 cm) was filled with 150 cc of copper oxide-zinc oxide-aluminum oxide calcined material obtained in the same manner as in Comparative Example 5, and without prior hydrogen reduction, 13A gas (135 liters/h) and hydrogen (15 liters/h) were passed through the desulfurization tube (GHSV = 1000 h⁻¹), and desulfurization was conducted in the conditions of temperature of 200°C and pressure of 0.02 kg/cm²-G.

As a result, when 13A gas and hydrogen were introduced, the temperature of the desulfurization layer exceeded 500°C, and 0.03 ppm of sulfur was detected 200 hours later.

## Claims

1. A method of desulfurization of town gas not containing hydrogen,characterized in that the desulfurization is carried out by adding hydrogen to the town gas, and by using copper-zinc desulfurizing agent prepared by co-precipitation method.

2. A method of desulfurization of town gas according to claim 1, wherein hydrogen is added to town gas by 0.01 to 10 vol.%.

3. A method of desulfurization of town gas according to claim 2, wherein the copper-zinc desulfurizing agent is a Cu-Zn desulfurizing agent obtainable by reducing a copper oxide-zinc oxide mixture prepared by co-precipitation method by using copper compound and zinc compound, by using inert gas containing hydrogen by 6 vol.% or less at about 150 to 350 °C; or a Cu-Zn-Al desulfurizing agent obtainable by reducing a copper oxide-zinc oxide-aluminum oxide mixture prepared by co-precipitation method using copper compound, zinc compound and aluminum compound, by using inert gas containing hydrogen by 6 vol.% or less at about 150 to 350 °C.

4. A method of desulfurization of town gas according to claim 3, wherein the hydrogen content in the inert gas is 0.5 to 4 vol.%.

5. A method of desulfurization of town gas according to claim 4, wherein the sulfur content in town gas is desulfurized to 5 ppb or less.

6. A method of desulfurization of town gas according to claim 5, wherein the atomic ratio of copper-zinc in copper oxide/zinc oxide mixture is 1: about 0.3 to 10.

7. A method of desulfurization of town gas according to claim 5, wherein the atomic ratio of copper-zinc-aluminum in copper oxide-zinc oxide-aluminum oxide mixture is 1: about 0.3 to 10: about 0.05 to 2.

8. A method of desulfurization of town gas according to claim 1, 5, 6, or 7, wherein the town gas is natural gas, liquefied natural gas, liquefied petroleum gas, petroleum refined off-gas, or their mixed gas.
